# EUROPEAN PATENT APPLICATION

(11) **EP 4 198 564 A1**
(43) Date of publication of application: **21.06.2023**
(21) Application number: 21215380.3
(22) Date of filing: 17.12.2021
(51) Int. Cl.: G01S 13/87, G01S 7/02, G01S 7/285, G01S 7/35, G01S 13/76, G01S 13/84, G01S 5/02, G01S 11/06, G01S 11/08

(54) **WIRELESS COMMUNICATION DEVICE, SYSTEM AND METHOD WITH LOCALIZATION CAPABILITIES**

(71) Applicant: Stichting IMEC Nederland, 5656 AE Eindhoven (NL)
(72) Inventor: Bechthum, Elbert, 5503 HA Veldhoven (NL); van den Heuvel, Johan, 5663 RD Geldrop (NL)
(74) Representative: Körfer, Thomas

(57) **Abstract**

A wireless communication device (40) with localization capabilities is provided. Said wireless communication device (40) comprises a first receive chain (41a) for receiving a first signal from a first static communication node, and at least a second receive chain (41b, ..., 41N) for receiving at least a second signal from at least a second static communication node. In this context, said first and at least one second receive chains (41a, 41b, ..., 41N) are configured to simultaneously receive said first and at least one second signals. In addition to this, the wireless communication device (40) is configured to determine a first distance between the wireless communication device (40) and the first static communication node on the basis of the first signal, determine at least a second distance between the wireless communication device (40) and the at least one second static communication node on the basis of the at least one second signal, and determine a location of the wireless communication device (40) on the basis of said first and least one second distances.

## Description

The invention relates to a wireless communication device with localization capabilities, a system comprising such a wireless communication device with localization capabilities and at least two static communication nodes, and a corresponding wireless communication method with localization capabilities.

Generally, in times of an increasing number of wireless communication applications providing radio frequency based ranging, such as indoor localization and navigation, asset tracking as well as secure access control, there is a growing need of a wireless communication device with localization capabilities, a system comprising such a wireless communication device with localization capabilities and at least two static communication nodes, and a corresponding wireless communication method with localization capabilities for performing localization determination exemplarily in the context of such applications in a particularly accurate and efficient manner.

Tianyu Wang et al.: "An Efficient Single-Anchor Localization Method Using Ultra-Wide Bandwidth Systems", Applied Sciences, 2020, 10, 57; doi:10.3390/app10010057 describes a localization method employing just a single anchor or anchor node, respectively, which disadvantageously leads to a limited accuracy, exemplarily decimeter-level accuracy, with respect to localization determination especially due to said usage of a single anchor.

Accordingly, there is the object to provide a wireless communication device with localization capabilities, a system comprising such a wireless communication device with localization capabilities and at least two static communication nodes, and a corresponding wireless communication method with localization capabilities in order to allow for localization determination in a highly accurate manner.

This object is solved by the features of claim 1 for a wireless communication device with localization capabilities, the features of claim 11 for a system comprising such a wireless communication device with localization capabilities and at least two static communication nodes, and the features of claim 13 for a corresponding wireless communication method with localization capabilities. The dependent claims contain further developments.

According to a first aspect of the invention, a wireless communication device with localization capabilities is provided. Said wireless communication device comprises a first receive chain for receiving a first signal from a first static communication node, and at least a second receive chain for receiving at least a second signal from at least a second static communication node. In this context, said first and at least one second receive chains are configured to simultaneously receive said first and at least one second signals. In addition to this, the wireless communication device is configured to determine a first distance between the wireless communication device and the first static communication node on the basis of the first signal, determine at least a second distance between the wireless communication device and the at least one second static communication node on the basis of the at least one second signal, and determine a location of the wireless communication device on the basis of said first and least one second distances.

Advantageously, the first static communication node and the at least one second static communication node do not need to be synchronous for an accurate localization determination, which, for instance, leads to a particularly high efficiency.

Further advantageously, for example, the above-mentioned simultaneous reception reduces localization determination time, thereby typically increasing efficiency.

With respect to the first static communication node and the at least one second static communication node, it is noted that "static" is preferably to be understood in the context of a respective reference system. In other words, for instance, such static communication nodes can be employed in a car in the case that the wireless communication device is preferably to be understood as the corresponding car key, and the car wants to know where/how close the car key is.

According to a first preferred implementation form of the first aspect of the invention, each of the first and at least one second receive chains is configured to tune into a different frequency with respect to each other. Advantageously, for instance, a collision of the signals from the static communication nodes can be prevented in a highly efficient manner.

According to a second preferred implementation form of the first aspect of the invention, each of the first and at least one second receive chains is configured to independently generate a corresponding local oscillator signal with respect to each other. Advantageously, for example, said local oscillator signals generation can be based on a common reference especially for enabling angle-of-arrival measurements.

According to a further preferred implementation form of the first aspect of the invention, the first receive chain comprises a first phase-locked loop. In addition to this or as an alternative, the at least one second receive chain comprises at least a second phase-locked loop. Advantageously, for instance, each of the respective phase-locked loops can be provided with a common reference, thereby ensuring sufficiently phase-aligned receive chains, which especially allow for accurate and efficient angle-of-arrival measurements.

According to a further preferred implementation form of the first aspect of the invention, the first distance is determined on the basis of time-of-flight measurements and/or phase-based ranging and/or signal-strength measurements with respect to the first signal. Additionally or alternatively, the at least one second distance is determined on the basis of time-of-flight measurements and/or phase-based ranging and/or signal-strength measurements with respect to the at least one second signal. Advantageously, for example, the invention can be applied in a flexible manner, which leads to an increased efficiency with special respect to implementation.

According to a further preferred implementation form of the first aspect of the invention, the wireless communication device further comprises at least one transmit chain.

In this context, said at least one transmit chain is configured to send a synchronization signal to at least one, preferably each, of the first and the at least one second static communication node especially in order to synchronize said first and at least one second static communication nodes. Advantageously, for instance, due to said synchronization, a single-direction ranging measurement can be sufficient to determine the location of the wireless communication device.

In addition to this or as an alternative, said at least one transmit chain is configured to request the first signal form the first static communication node and the at least one second signal from the at least one second static communication node with the aid of a corresponding request signal, preferably a corresponding request signal at the same frequency, more preferably a single request signal at the same frequency, most preferably a single request signal at the same frequency for each of the first and at least one second static communication nodes. Advantageously, for instance, two-way ranging can be used without the need of synchronizing the static communication nodes. Further advantageously, with the aid of said single request signal, the signals from the static communication nodes can be requested in parallel.

According to a further preferred implementation form of the first aspect of the invention, the first receive chain comprises a first receive antenna. In addition to this or as an alternative, the at least one second receive chain comprises at least a second receive antenna. Advantageously, for example, due to the usage of separate receive antennas, it can additionally be allowed for angle-of-arrival measurements.

According to a further preferred implementation form of the first aspect of the invention, the wireless communication device comprises a single receive antenna. In this context, said single receive antenna is configured to provide its corresponding receive signal for at least one, preferably each, of the first and at least one second receive chains. Advantageously, for instance, by using said single receive antenna, all ranging measurements are done with respect to the same antenna, hence the determined location does not have an orientation dependence with respect to the wireless communication device.

According to a further preferred implementation form of the first aspect of the invention, the wireless communication device further comprises a switch matrix. In this context, said switch matrix is configured to switch at least one, preferably each, of the first and at least one second receive antennas in such a manner that one of said first and at least one second receive antennas is configured as a single receive antenna providing its corresponding receive signal for at least one, preferably each, of the first and at least one second receive chains. Advantageously, for example, it can not only be allowed for angle-of-arrival measurements, if desired, but also the above-mentioned orientation dependency with respect to the wireless communication device can be prevented.

According to a further preferred implementation form of the first aspect of the invention, the at least one second receive chain comprises a second receive chain and a third receive chain. As an alternative, the at least one second receive chain comprises a second receive chain, a third receive chain, and at least a fourth receive chain. Advantageously, for instance, the first alternative of a second and third receive chain especially allows for trilateration, whereas the second alternative especially allows for a further increased accuracy due to at least four static communication nodes.

In this context, it is noted that the above-mentioned features regarding the at least one second receive chain preferably applies in an analogous manner for the second receive chain and the third receive chain or for the second receive chain, the third receive chain, and the at least one fourth receive chain, respectively.

According to a second aspect of the invention, a system is provided. Said system comprises at least one wireless communication device according to any of the implementation forms of the first aspect of the invention, and a first static communication node, and at least a second static communication node.

Advantageously, the first static communication node and the at least one second static communication node do not need to be synchronous for an accurate localization determination, which, for instance, leads to a particularly high efficiency.

With respect to the first static communication node and the at least one second static communication node, it is noted that "static" is preferably to be understood in the context of a respective reference system.

According to a first preferred implementation form of the second aspect of the invention, at least said first and at least one second static communication nodes are synchronized with respect to each other. Advantageously, for instance, due to said synchronization, a single-direction ranging measurement can be sufficient to determine the location of the wireless communication device.

According to a third aspect of the invention, a wireless communication method with localization capabilities is provided. Said wireless communication method comprises the steps of receiving a first signal from a first static communication node with the aid of a first receive chain of a wireless communication device, receiving at least a second signal from at least a second static communication node with the aid of at least a second receive chain of said wireless communication device. In this context, said first and at least one second signals are simultaneously received. In addition to this, the method further comprises the steps of determining a first distance between the wireless communication device and the first static communication node on the basis of the first signal, determining at least a second distance between the wireless communication device and the at least one second static communication node on the basis of the at least one second signal, and determining a location of the wireless communication device on the basis of said first and at least one second distances.

Advantageously, the first static communication node and the at least one second static communication node do not need to be synchronous for an accurate localization determination, which, for instance, leads to a particularly high efficiency. Further advantageously, for example, the above-mentioned simultaneous reception reduces localization determination time, thereby typically increasing efficiency.

With respect to the first static communication node and the at least one second static communication node, it is noted that "static" is preferably to be understood in the context of a respective reference system.

According to a first preferred implementation form of the third aspect of the invention, the wireless communication method further comprises the step of tuning into a different frequency with respect to each other with the aid of each of the first and at least one second receive chains. In addition to this or as an alternative, the wireless communication method further comprises the step of independently generating a corresponding local oscillator signal with respect to each other with the aid of each of the first and at least one second receive chains.

Advantageously, for instance, a collision of the signals from the static communication nodes can be prevented in a highly efficient manner. Further advantageously, for example, said local oscillator signals generation can be based on a common reference especially for enabling angle-of-arrival measurements.

According to a second preferred implementation form of the third aspect of the invention, especially for the purpose of trilateration, the step of receiving the at least one second signal from the at least one second static communication node with the aid of the at least one second receive chain of the wireless communication device comprises receiving a second signal and a third signal from a second static communication node and a third static communication node with the aid of a second receive chain and a third receive chain of the wireless communication device.

In addition to this or as an alternative, especially for the purpose of trilateration, the step of determining the at least one second distance between the wireless communication device and the at least one second static communication node on the basis of the at least one second signal comprises determining a second distance between the wireless communication device and the second static communication node on the basis of the second signal, and determining a third distance between the wireless communication device and the third static communication node on the basis of the third signal.

Further additionally or further alternatively, especially for the purpose of trilateration, the step of determining the location of the wireless communication device on the basis of the first and at least one second distances comprises determining the location of the wireless communication device on the basis of the first, second, and third distances.

Exemplary embodiments of the invention are now further explained with respect to the drawings by way of example only, and not for limitation. In the drawings:
- Fig. 1: illustrates a general example for ranging between two radio-equipped nodes;
- Fig. 2: shows an exemplary usage of trilateration for localization of a mobile node;
- Fig. 3: illustrates a typical timing diagram of a localization determination using multiple anchors;
- Fig. 4: shows a block diagram of an exemplary embodiment of the first aspect of the invention;
- Fig. 5: shows an exemplary timing diagram of a localization determination with the aid of the invention;
- Fig. 6A: shows a further exemplary embodiment of the first aspect of the invention;
- Fig. 6B: depicts a further exemplary embodiment of the first aspect of the invention;
- Fig. 6C: illustrates a further exemplary embodiment of the inventive wireless communication device;
- Fig. 6D: shows a further exemplary embodiment of the first aspect of the invention;
- Fig. 7A: depicts a further exemplary timing diagram of localization determination;
- Fig. 7B: illustrates a further exemplary timing diagram of localization determination;
- Fig. 8: shows a block diagram of an exemplary embodiment of a transceiver in the sense of the invention;
- Fig. 9: illustrates an exemplary reduction of ranging time in the context of a system according to the second aspect of the invention; and
- Fig. 10: shows a flow chart of an embodiment of the third aspect of the invention.

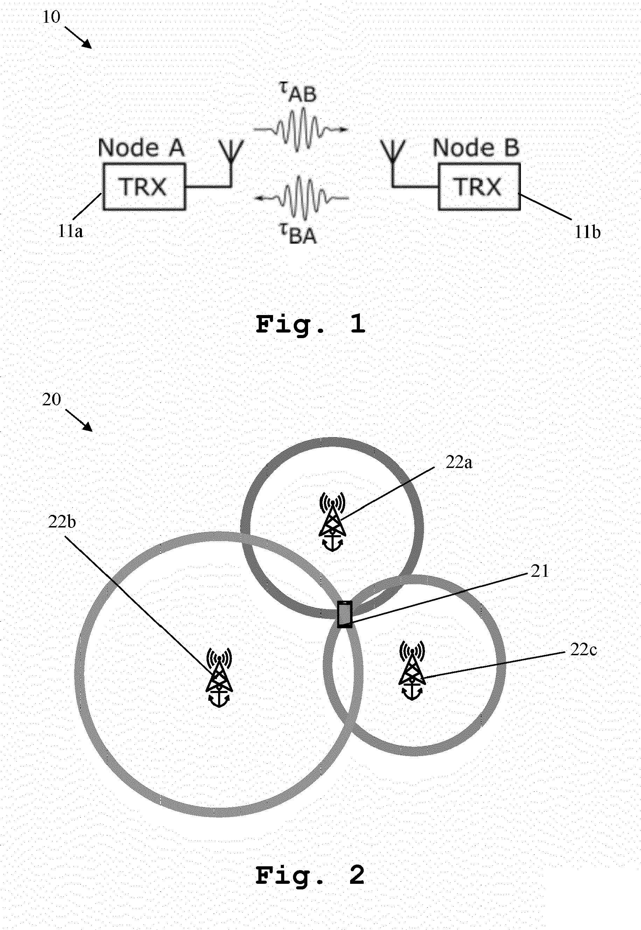

With respect to Fig. 1, especially as a kind of background information, it should be mentioned that every mobile device typically features wireless connectivity. Accurate radio frequency (RF) based ranging (i.e. measuring the range between two radios) is of major importance to enable rapidly emerging applications such as indoor localization and navigation, asset tracking as well as secure access control. A quick and accurate method for measuring the range is to measure the time-of-flight (ToF) of a radio signal. Other methods include phase-based ranging (probably slower), or signal-strength based (probably inaccurate).

As it can be seen, Fig. 1 depicts a general example 10 for ranging between two radio-equipped nodes 11a and 11b. In other words, Fig. 1 gives a simplified overview of a ranging system 10. The two nodes 11a, 11b are physically in two different locations and the time it takes for the radio signal to go from node A 11a to node B 11b (τAB) or vice versa (τBA) is a measure for the distance between the two nodes 11a, 11b.

To know the location of a mobile node especially in an unambiguous manner, a method called trilateration is used, where the distance to multiple anchor nodes, preferably three anchor nodes or static communication nodes, respectively, is measured to determine the relative location relative to those anchors. Since the location of the anchors is known, also the location of the mobile node is known, which is visualized in Fig. 2.

In this context, said Fig. 2 depicts a mobile node or a wireless communication device 21, respectively, and three anchor nodes or three static communication nodes 22a, 22b, 22c, respectively. For the sake of completeness, it is additionally noted that Fig. 2, especially the system 20 thereof, also illustrates an exemplary embodiment of the second aspect of the invention in the case if the mobile node 21 is configured in a manner according to the first aspect of the invention.

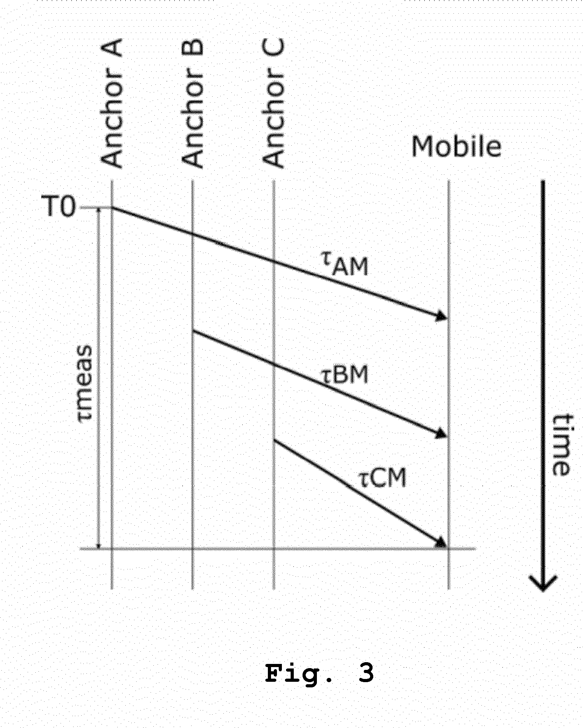

Furthermore, it is noted that especially when the anchors such as the anchors 22a, 22b, 22c are synchronized, preferably time-synchronized, single-direction ranging measurement can be sufficient to calculate the location of the mobile node. With special respect to common non-inventive localization determination, the main drawback of the localization procedure is that multiple ranging measurements need to be performed consecutively to determine the location, depending on the number of anchors. The timeline of this is shown in Fig. 3. The vertical dimension is time.

According to said Fig. 3, the time it takes for the respective radio signal to go from anchor A to mobile node M (τAM), the time it takes for the respective radio signal to go from anchor B to mobile node M (τBM), and the time it takes for the respective radio signal to go from anchor C to mobile node M (τCM) are illustrated. Additionally, the respective measurement time, especially ranging measurement time, (τmeas) is also illustrated.

For the sake of completeness, it is noted that the location of the anchors in this chart according to said Fig. 3 does not necessarily represent the physical location of those anchors. As it can further be seen from Fig. 3, firstly, anchor A sends a packet to the mobile node. Once this transmission is fully received, anchor B can send a packet, and then anchor C.

Disadvantageously, this has to be done consecutively because the mobile node typically has only one receiver, or multiple receivers operating at the same frequency. The anchors cannot send simultaneously at the same frequency because their signals would collide in the air since they must send at the same frequency because the traditional (non-inventive) receiver can only listen to one frequency at a time.

Accordingly, especially in the sense of common mobile nodes or common wireless communication devices, respectively, it is generally to be pointed out that in a full ranging measurement, all anchors must communicate with the mobile node consecutively. This results in a slow update rate of the location and the radio channel in the air is used for a long time and hence cannot be used by other devices. Also the mobile node needs to be active for a long time to receive all the signals. Advantageously, the inventive wireless communication device especially comprises a receiver architecture to be able to receive the ranging packets of the anchors or the static communication nodes, respectively, simultaneously.

Further advantageously, since we range simultaneously to multiple anchors we have a very accurate single shot position even when moving at high speed. This is even more so when anchors are synchronized and one way ranging can be used. This type of accuracy would require an order of magnitude or more increase in update rate of conventional systems.

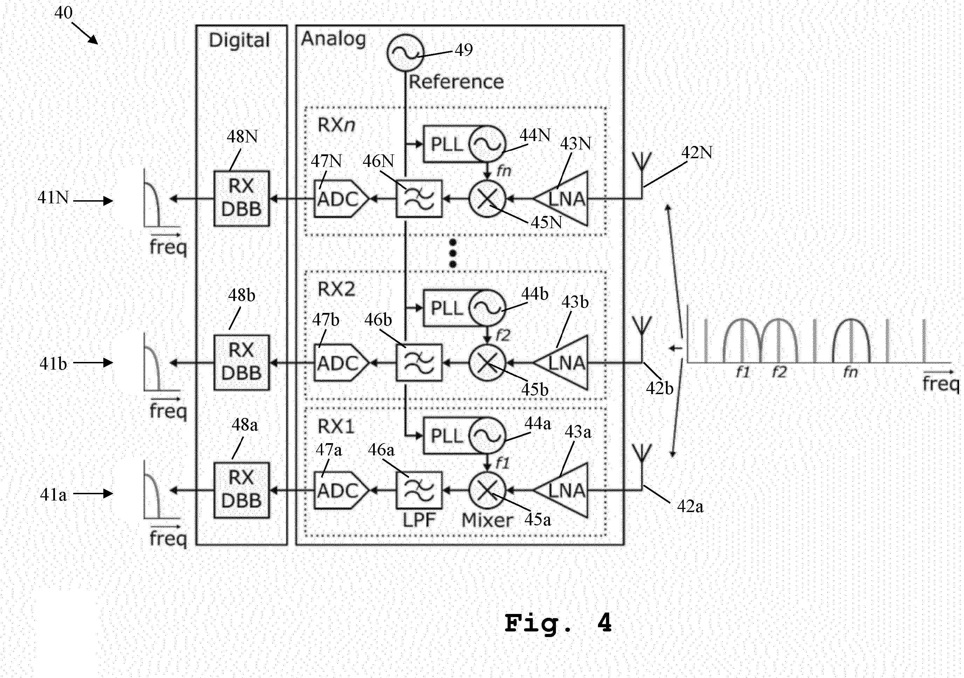

An exemplary embodiment 40 of the inventive wireless communication device or the inventive multi-receiver ranging architecture, respectively, is shown in Fig. 4.

According to said Fig. 4, the embodiment 40 comprises n receive chains 41a, 41b, ..., 41N. Each of said receive chains 41a, 41b, ..., 41N comprises a receive antenna 42a, 42b, ..., 42N connected to an input of a respective low noise amplifier 43a, 43b, ..., 43N. With the aid of a corresponding mixer 45a, 45b, ..., 45N, the output of said low noise amplifier 43a, 43b, ..., 43N is mixed with an output of a respective phase-locked loop (PLL) 44a, 44b, ..., 44N. The output of the mixer 45a, 45b, ..., 45N is passed through a respective low pass filter 46a, 46b, ..., 46N to a corresponding analog-to-digital converter 47a, 47b, ..., 47N. The output of said analog-to-digital converter 47a, 47b, ..., 47N is passed to a respective digital receive portion 48a, 48b, ..., 48N of the embodiment 40.

As it can be seen, and as already mentioned above, the total number of receive chains 41a, 41b, ..., 41N in the receiver 40 is n for simultaneous reception from n anchors or static communication nodes, respectively. An essential feature of these receive chains 41a, 41b, ..., 41N is that each has its own PLL 44a, 44b, ..., 44N. This enables each receive chain 41a, 41b, ..., 41N to tune into a different frequency and receive from a different anchor or static communication node, respectively.

Advantageously, with respect to the above-mentioned PLL 44a, 44b, ..., 44N, it should be mentioned that the usage of such a PLL or a full PLL, respectively, is not necessary. In this context, a local oscillator, preferably a local oscillator with sufficient frequency stability, would be sufficient instead of a PLL.

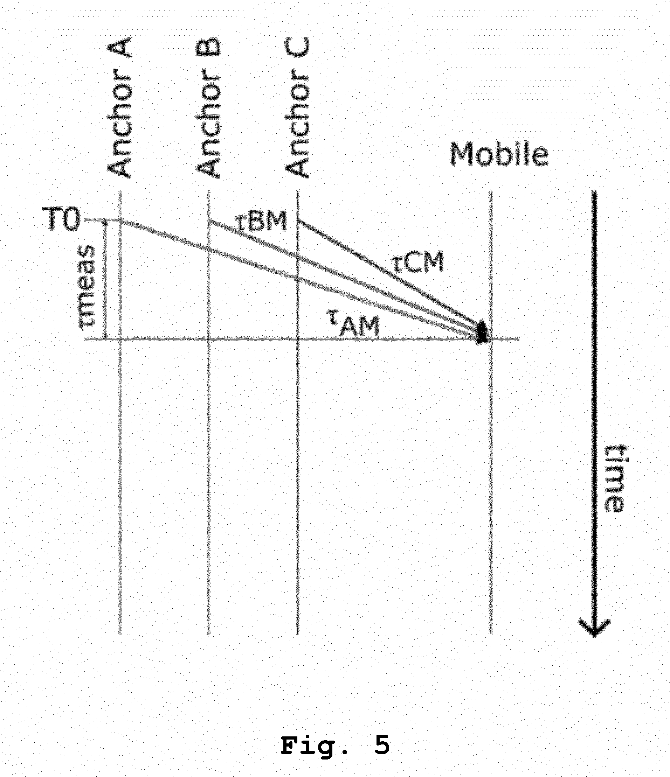

The timing diagram of such a localization measurement is shown in Fig. 5. The measurement time of this simultaneous ranging is much shorter than the traditional approach of consecutive ranging measurements.

According to said Fig. 5 the time it takes for the respective radio signal to go from anchor A to mobile node M (τAM), the time it takes for the respective radio signal to go from anchor B to mobile node M (τBM), and the time it takes for the respective radio signal to go from anchor C to mobile node M (τCM) are illustrated. Additionally, the respective measurement time (τmeas) is also illustrated, which is advantageously shorter than the one of Fig. 3.

Again, with respect to said Fig. 4, it is noted that each receive chain 41a, 41b, ..., 41N has its own antenna 42a, 42b, ..., 42N, which are physically separated.

In this context, said physical separation of antennas especially means that spatially divided and electrically not connected to each other.

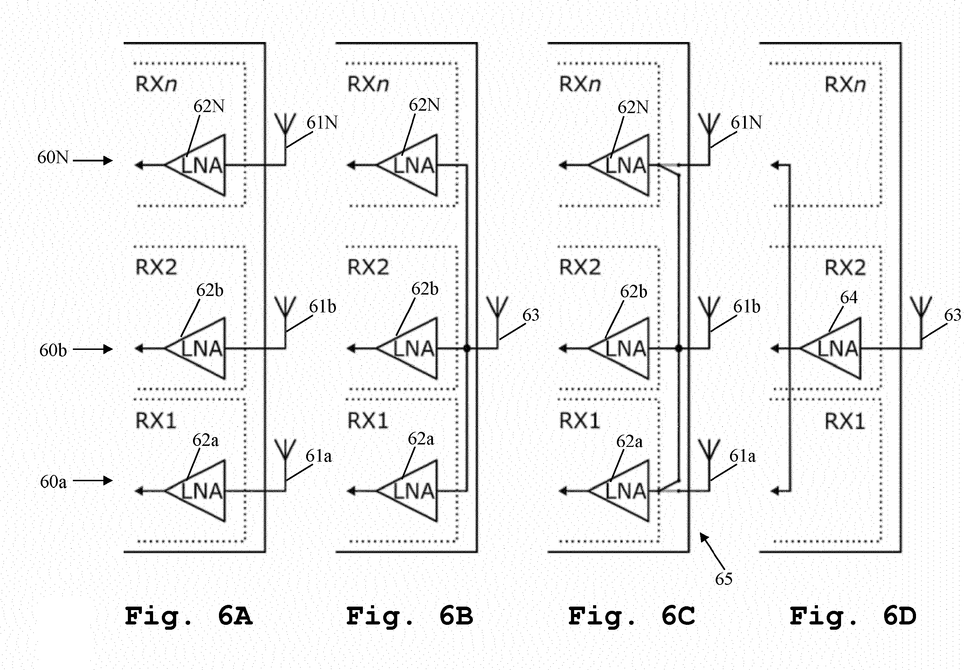

It is further noted that the calculated range is between the anchor antenna and the receive chain antenna. Hence, the calculated location depends on the orientation of the antennas and therefore the orientation of the device. Accordingly, for instance, the topology according to Fig. 6A comprising an individual antenna 61a, 61b, ..., 61N for each receive chain 60a, 60b, ..., 60N especially implies an orientation dependency with respect to localization determination.

In addition to this, with respect to said Fig. 6A, it is noted that each antenna 61a, 61b, ..., 61N is connected to a corresponding low noise amplifier 62a, 62b, ..., 62N.

To prevent the above-mentioned orientation dependency, the receive chains 60a, 60b, ..., 60N can be connected to a single antenna 63, as exemplary shown in Fig. 6B. Advantageously, using this topology, all ranging measurements are done with respect to the same antenna 63, hence the calculated location does not have an orientation dependence.

Another option to connect multiple receiver chains 60a, 60b, ..., 60N to a single antenna 63 is shown in Fig. 6D, where the received signal is split to the multiple receive chains 60a, 60b, ..., 60N after a low noise amplifier, especially a single low noise amplifier 64. For the sake of completeness, it should be mentioned that downside of these single-antenna architectures is that Angle-of-Arrival (AoA) measurements are not possible anymore because there is no physical separation between the antennas of the receive chains.

Advantageously, if AoA needs to be supported, antenna switches can be used to switch between using a single antenna or individual antennas, as shown in Fig. 6C comprising a switch matrix 65 in the sense of the invention.

Moreover, especially when anchors or static communication nodes, respectively, are not time-synchronized or time-aligned, the moment of departure of the ranging packets from the anchors to the mobile node or wireless communication node, respectively, is typically not accurately known.

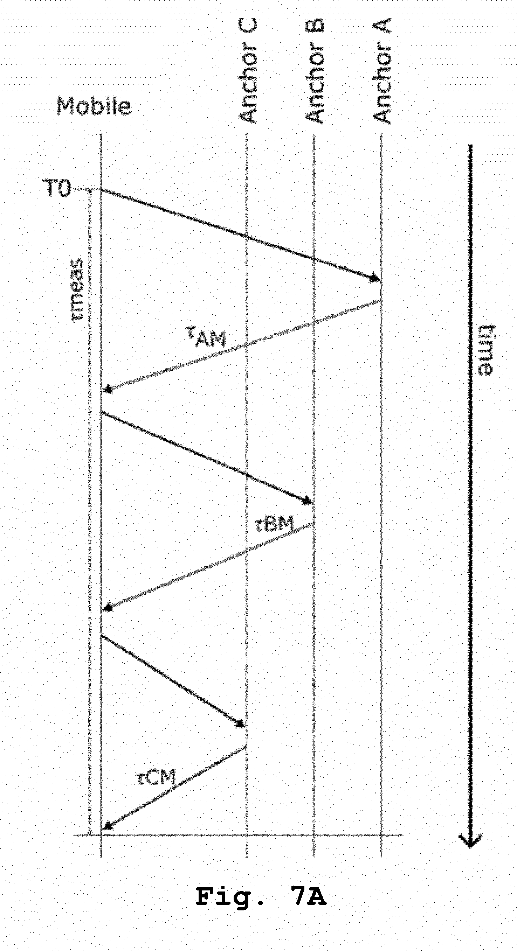

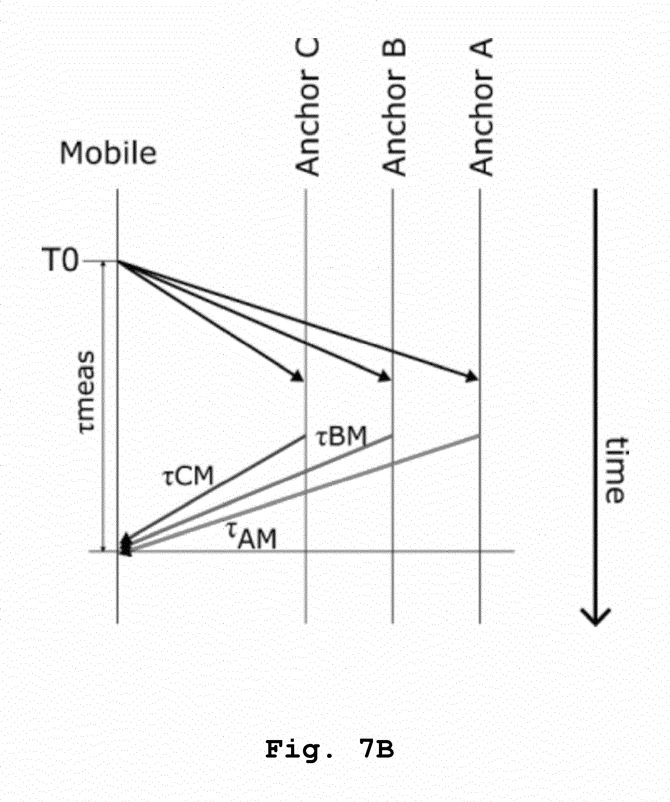

In such a case, two-way ranging may preferably be required. See the timeline of Fig. 7A or Fig. 7B, respectively. Whereas said Fig. 7A shows two-way ranging in a manner that ranging with respect to each anchor is done in a sequential manner, according to said Fig. 7B, said ranging with respect to each anchor is advantageously done in parallel.

In this way the anchors or static communication nodes, respectively, are especially synchronized by the packet from the mobile node or wireless communication node, respectively.

For the sake of completeness, with respect to said synchronization especially in the context of Fig. 7B, it should be mentioned that as the packet, especially single packet, from the mobile node or wireless communication node, respectively, arrives at the anchors or static communication nodes, respectively, typically at different points in time because of respective path length differences, the time of flight of this packet from the mobile node to the anchors is also used in the corresponding ranging determination.

In addition to this, it should be noted that the above-mentioned packet, especially single packet, is transmitted at the same frequency to each of the anchors, whereas the corresponding answer packets is transmitted at different frequencies from the anchors. In other words, each anchor or each static communication node, respectively uses its own frequency for answering or transmitting information, respectively.

Furthermore, according to said Fig. 7A or Fig. 7B, respectively, the time it takes for the respective radio signal to go from anchor A to mobile node M (τAM), the time it takes for the respective radio signal to go from anchor B to mobile node M (τBM), and the time it takes for the respective radio signal to go from anchor C to mobile node M (τCM) are illustrated. Additionally, the respective measurement time (τmeas) is also illustrated.

Again, with respect to Fig. 4, it is noted that especially to also enable Angle-of-arrival measurements with the receive chains 41a, 41b, ..., 41N, there should be a common reference 49 preferably to connected to each of the phase-locked loops 44a, 44b, ..., 44N. Advantageously, in this manner, the receivers are sufficiently phase-aligned.

Furthermore, it should be noted that especially since some anchors are far away and others are close by the mobile node, the received signal strength may be different at different channels. Accordingly, the receivers should have a high Adjacent Channel Rejection (ACR), meaning they can sufficiently suppress the energy in all channels but the one being received by that particular receiver chain.

Additionally or alternatively, the anchors should make sure that the received power of each receive chain is approximately equal by adapting their output power. This can exemplarily be achieved if the mobile node indicates to the anchors what the received signal strength of each channel was in the previous ranging measurement, or if the approximate location of the mobile node is known.

For the sake of completeness, it is noted that the invention can also be applied to phase-based ranging and received signal strength indicator based ranging. In addition to this or as an alternative, it is noted that the invention also works with other types of receivers, not just the zero intermediate frequency receiver as exemplarily depicted in Fig. 4.

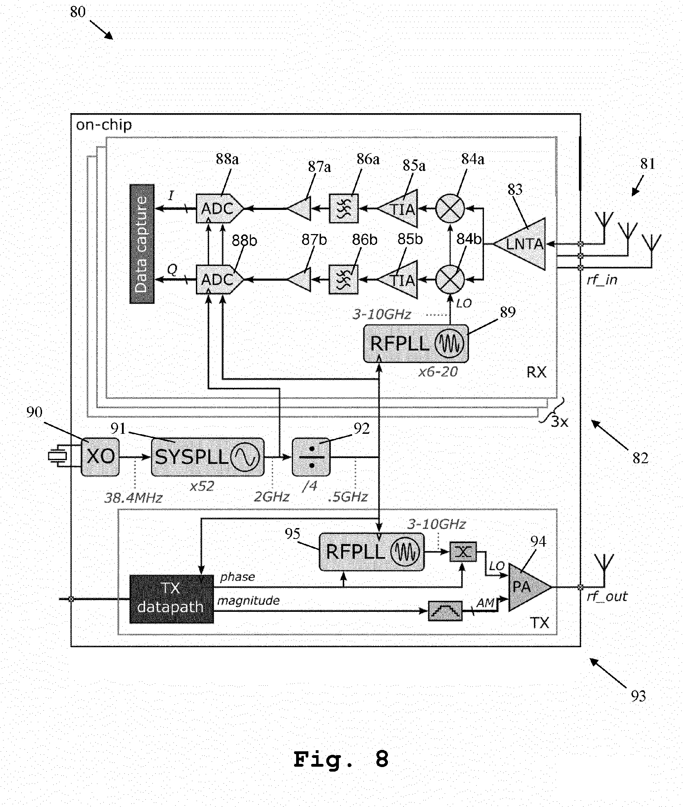

Moreover, Fig. 8 depicts an exemplary embodiment of a transceiver, especially an IR-UWB (impulse radio ultra-wideband) transceiver 80, in the sense of the invention. Said transceiver 80 comprises a system clock generator 91, along with an energy-efficient asynchronous polar transmitter 93 and three receivers 82 with self-contained PLLs such as PLL 89a.

The transmitter 93 exemplarily employs a polar architecture, enabling low power consumption. In this context, it might be particularly advantageous if the respective sidelobe suppression should be <-28dBr, which is exemplarily achieved by using a digital PA 94 preferably in combination with an asynchronous digital pulse shaper.

The receiver, especially each of the receivers 82, comprises a two-stage LNTA (Low-noise transconductance amplifier) 83. It also comprises passive mixers 84a and 84b, TIAs (Transimpedance amplifier) 85a and 85b, low pass filters 86a and 86b, amplifiers 87a and 87b and analog-to-digital converters (ADC) 88a and 88b for the I- and Q-path, respectively.

It is noted that it might be particularly advantageous if all amplifiers in the receiver or each of the receivers 82, respectively, comprises unit inverter-based gm cells especially regulated by a self-biased current regulator.

For instance, the ADC, such as the ADC 88a or 88b, may be a 2GSps 6bit 2× time-interleaved (TI) ADC, which might especially be a trade-off between TI complexity and slice sample rate. Furthermore, the two respective MSB bits may exemplarily be resolved using a loop-unrolled SAR architecture. The remaining 4 bits may exemplarily be generated by an asynchronous digital slope ADC. The calibration of the offset of the SAR comparators and digital-slope comparator especially guarantees performance over PVT corners and mismatch.

Furthermore, the output of each receive chain 82 may preferably be captured on an on-chip memory for offline evaluation of the whole receiver chain. Moreover, it might be particularly advantageous if center frequencies of all the channels are integer multiples of 499.2MHz, enabling a clock-generation approach using two cascaded integer PLLs.

The distributed cascaded PLL architecture, consisting of a system clock PLL (SYSPLL) 91 and multiple TX/RX local PLLs (RF-PLLs) 89, 95, is proposed to enable low-power clock distribution as well as simultaneous reception of up to three different channels, to receive signals from three transmitters simultaneously. Especially thanks to the multi- channel reception, the ranging throughput is increased 3×, resulting in a three-fold reduction in the measurement time or a three-fold increase in the update rate, leading to a significant improvement in precision.

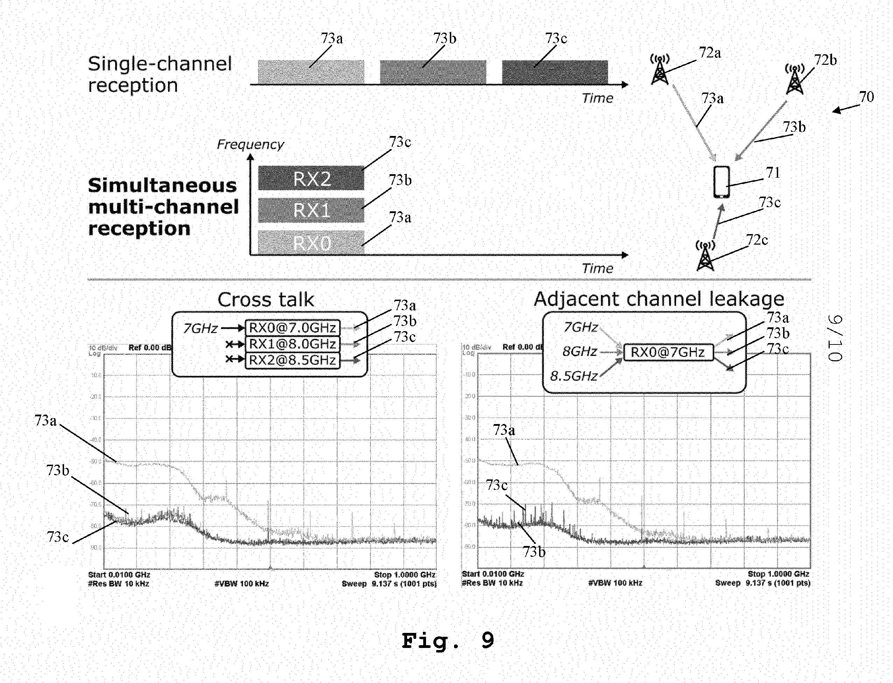

In this context, see Fig. 9 for an illustration of the advantages of simultaneous multi-channel reception with respect to single-channel reception. Exemplarily, with the reference clock of 38.4MHz from the crystal oscillator (XO) 90 according to Fig. 8, the SYSPLL 91 provides a 1996.8 MHz clock for the receiver ADCs, such as ADC 88a, and a divided-by-4, especially with the aid of divider 92, 499.2MHz clock as the system clock and the reference of the transmitter and receiver RFPLLs 95, 89.

Again, with respect to Fig. 9, an exemplary embodiment 70 of system according to the second aspect of the invention is depicted. Said system 70 comprises a mobile node or a wireless communication device 71, respectively, and three anchor nodes or three static communication nodes 72a, 72b, 72c, respectively. In this context, the wireless communication device 71 receives three signals 73a, 73b, 73c from the static communication nodes 72a, 72b, 72c.

In addition to this, as it can be seen, Fig. 9 highlights the simultaneous reception of the three corresponding different channels, where crosstalk and adjacent- channel leakage (ACL) are major challenges. Advantageously, both the crosstalk and ACL are >20dB below the desired signal, providing the required SNR for accurate simultaneous ranging measurements.

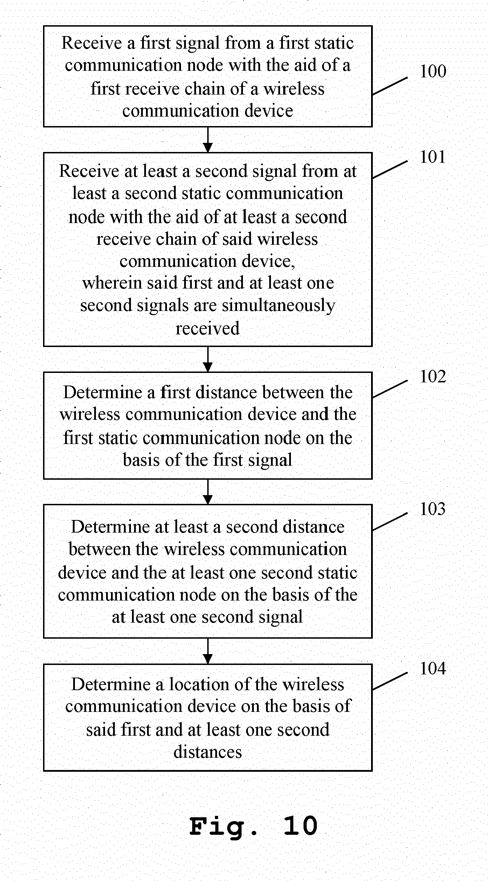

Finally, Fig. 10 shows a flow chart of an embodiment of the inventive wireless communication method with localization capabilities. In a first step 100, a first signal is received from a first static communication node with the aid of a first receive chain of a wireless communication device. Then, in a second step 101, at least a second signal is received from at least a second static communication node with the aid of at least a second receive chain of said wireless communication device, wherein said first and at least one second signals are simultaneously received. Furthermore, in a third step 102, a first distance between the wireless communication device and the first static communication node is determined on the basis of the first signal. Moreover, in a fourth step 103, at least a second distance between the wireless communication device and the at least one second static communication node is determined on the basis of the at least one second signal. In addition to this, in a fifth step 104, a location of the wireless communication device is determined on the basis of said first and at least one second distances.

Advantageously, it is noted that the above-mentioned steps 102 and 103 can be performed simultaneously.

It is further noted that it might be particularly advantageous if the wireless communication method further comprises the step of tuning into a different frequency with respect to each other with the aid of each of the first and at least one second receive chains. In addition to this or as an alternative, the wireless communication method may further comprise the step of independently generating a corresponding local oscillator signal with respect to each other with the aid of each of the first and at least one second receive chains.

Furthermore, especially for the purpose of trilateration, it might be particularly advantageous if the step of receiving the at least one second signal from the at least one second static communication node with the aid of the at least one second receive chain of the wireless communication device comprises receiving a second signal and a third signal from a second static communication node and a third static communication node with the aid of a second receive chain and a third receive chain of the wireless communication device.

In addition to this or as an alternative, especially for the purpose of trilateration, it might be particularly advantageous if the step of determining the at least one second distance between the wireless communication device and the at least one second static communication node on the basis of the at least one second signal comprises determining a second distance between the wireless communication device and the second static communication node on the basis of the second signal, and determining a third distance between the wireless communication device and the third static communication node on the basis of the third signal.

Further additionally or further alternatively, especially for the purpose of trilateration, it might be particularly advantageous if the step of determining the location of the wireless communication device on the basis of the first and at least one second distances comprises determining the location of the wireless communication device on the basis of the first, second, and third distances.

With respect to the first receive chain, it is noted that the first receive chain may preferably comprise a first phase-locked loop. In addition to this or as an alternative, with respect to the at least one second receive chain, it is noted that the at least one second receive chain may preferably comprise at least a second phase-locked loop.

Furthermore, it is noted that it might be particularly advantageous if the first distance is determined on the basis of time-of-flight measurements and/or phase-based ranging and/or signal-strength measurements with respect to the first signal. In other words, the method may further comprise the step of determining the first distance on the basis of time-of-flight measurements and/or phase-based ranging and/or signal-strength measurements with respect to the first signal.

Additionally or alternatively, it is noted that it might be particularly advantageous if the at least one second distance is determined on the basis of time-of-flight measurements and/or phase-based ranging and/or signal-strength measurements with respect to the at least one second signal. In other words, the method may further comprise the step of determining the at least one second distance on the basis of time-of-flight measurements and/or phase-based ranging and/or signal-strength measurements with respect to the at least one second signal.

With respect to the wireless communication device, it is noted that the wireless communication device may further comprise at least one transmit chain. In this context, said at least one transmit chain may be configured to send a synchronization signal to at least one, preferably each, of the first and the at least one second static communication node especially in order to synchronize said first and at least one second static communication nodes.

In other words, the method may further comprise the step of configuring at least one transmit chain of the wireless communication device to send a synchronization signal to at least one, preferably each, of the first and the at least one second static communication node especially in order to synchronize said first and at least one second static communication nodes.

With respect to the first receive chain, it is noted that the first receive chain may comprise a first receive antenna. In addition to this or as an alternative, with respect to the at least one second receive chain, it is noted that the at least one second receive chain may comprise at least a second receive antenna.

Furthermore, it might be particularly advantageous if the wireless communication device comprises a single receive antenna. In this context, said single receive antenna may be configured to provide its corresponding receive signal for at least one, preferably each, of the first and at least one second receive chains. In other words, the method may further comprise the step of configuring a single receive antenna of the wireless communication device to provide its corresponding receive signal for at least one, preferably each, of the first and at least one second receive chains.

Moreover, it might be particularly advantageous if the wireless communication device further comprises a switch matrix. In this context, said switch matrix may be configured to switch at least one, preferably each, of the first and at least one second receive antennas in such a manner that one of said first and at least one second receive antennas is configured as a single receive antenna providing its corresponding receive signal for at least one, preferably each, of the first and at least one second receive chains.

In other words, the method may further comprise the step of configuring a switch matrix of the wireless communication device to switch at least one, preferably each, of the first and at least one second receive antennas in such a manner that one of said first and at least one second receive antennas is configured as a single receive antenna providing its corresponding receive signal for at least one, preferably each, of the first and at least one second receive chains.

With respect to the at least one second receive chain, it is noted that, especially for the purpose of trilateration, the at least one second receive chain may comprise a second receive chain and a third receive chain. As an alternative, the at least one second receive chain may comprise a second receive chain, a third receive chain, and at least a fourth receive chain.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A wireless communication device (40) with localization capabilities, the wireless communication device (40) comprising:
a first receive chain (41a) for receiving a first signal from a first static communication node, and
at least a second receive chain (41b, ..., 41N) for receiving at least a second signal from at least a second static communication node,
wherein said first and at least one second receive chains (41a, 41b, ..., 41N) are configured to simultaneously receive said first and at least one second signals,
wherein the wireless communication device (40) is configured to:
determine a first distance between the wireless communication device (40) and the first static communication node on the basis of the first signal,
determine at least a second distance between the wireless communication device (40) and the at least one second static communication node on the basis of the at least one second signal, and
determine a location of the wireless communication device (40) on the basis of said first and least one second distances.

2. The wireless communication device (40) according to claim 1,
wherein each of the first and at least one second receive chains (41a, 41b, ..., 41N) is configured to tune into a different frequency with respect to each other.

3. The wireless communication device (40) according to claim 1 or 2,
wherein each of the first and at least one second receive chains (41a, 41b, ..., 41N) is configured to independently generate a corresponding local oscillator signal with respect to each other.

4. The wireless communication device (40) according to any of the claims 1 to 3,
wherein the first receive chain (41a) comprises a first phase-locked loop (44a), and/or
wherein the at least one second receive chain (41b, ..., 41N) comprises at least a second phase-locked loop (44b, ..., 44N) .

5. The wireless communication device (40) according to any of the claims 1 to 4,
wherein the first distance is determined on the basis of time-of-flight measurements and/or phase-based ranging and/or signal-strength measurements with respect to the first signal, and/or
wherein the at least one second distance is determined on the basis of time-of-flight measurements and/or phase-based ranging and/or signal-strength measurements with respect to the at least one second signal.

6. The wireless communication device (40) according to any of the claims 1 to 5,
wherein the wireless communication device (40) further comprises at least one transmit chain (93),
wherein said at least one transmit chain (93) is configured to send a synchronization signal to at least one, preferably each, of the first and the at least one second static communication node especially in order to synchronize said first and at least one second static communication nodes, and/or
wherein said at least one transmit chain (93) is configured to request the first signal form the first static communication node and the at least one second signal from the at least one second static communication node with the aid of a corresponding request signal, preferably a corresponding request signal at the same frequency, more preferably a single request signal at the same frequency, most preferably a single request signal at the same frequency for each of the first and at least one second static communication nodes.

7. The wireless communication device (40) according to any of the claims 1 to 6,
wherein the first receive chain (41a) comprises a first receive antenna (61a), and/or
wherein the at least one second receive chain (41b, ..., 41N) comprises at least a second receive antenna (61b, ..., 61N).

8. The wireless communication device (40) according to any of the claims 1 to 6,
wherein the wireless communication device (40) comprises a single receive antenna (63),
wherein said single receive antenna (63) is configured to provide its corresponding receive signal for at least one, preferably each, of the first and at least one second receive chains (41a, 41b, ..., 41N).

9. The wireless communication device (40) according to claim 7,
wherein the wireless communication device (40) further comprises a switch matrix (65),
wherein said switch matrix (65) is configured to switch at least one, preferably each, of the first and at least one second receive antennas (61a, 61b, ..., 61N) in such a manner that one of said first and at least one second receive antennas (61a, 61b, ..., 61N) is configured as a single receive antenna (63) providing its corresponding receive signal for at least one, preferably each, of the first and at least one second receive chains (41a, 41b, ..., 41N).

10. The wireless communication device (40) according to any of the claims 1 to 9,
wherein the at least one second receive chain (41b, ..., 41N) comprises a second receive chain (41b9 and a third receive chain, or
wherein the at least one second receive chain (41b, ..., 41N) comprises a second receive chain (41b), a third receive chain, and at least a fourth receive chain.

11. A system (70) comprising:
at least one wireless communication device (40, 71) according to any of the claims 1 to 10, and
a first static communication node (72a), and at least a second static communication node (72b, 72c).

12. The system (70) according to claim 11,
wherein at least said first and at least one second static communication nodes (72a, 72b, 72c) are synchronized with respect to each other.

13. A wireless communication method with localization capabilities, the wireless communication method comprising the steps of:
receiving (100) a first signal from a first static communication node with the aid of a first receive chain of a wireless communication device,
receiving (101) at least a second signal from at least a second static communication node with the aid of at least a second receive chain of said wireless communication device,
wherein said first and at least one second signals are simultaneously received,
determining (102) a first distance between the wireless communication device and the first static communication node on the basis of the first signal,
determining (103) at least a second distance between the wireless communication device and the at least one second static communication node on the basis of the at least one second signal, and
determining (104) a location of the wireless communication device on the basis of said first and at least one second distances.

14. The wireless communication method according to claim 13,
wherein the wireless communication method further comprises the step of tuning into a different frequency with respect to each other with the aid of each of the first and at least one second receive chains, and/or
wherein the wireless communication method further comprises the step of independently generating a corresponding local oscillator signal with respect to each other with the aid of each of the first and at least one second receive chains.

15. The wireless communication method according to claim 13 or 14,
wherein, especially for the purpose of trilateration, the step of receiving the at least one second signal from the at least one second static communication node with the aid of the at least one second receive chain of the wireless communication device comprises receiving a second signal and a third signal from a second static communication node and a third static communication node with the aid of a second receive chain and a third receive chain of the wireless communication device, and/or
wherein, especially for the purpose of trilateration, the step of determining the at least one second distance between the wireless communication device and the at least one second static communication node on the basis of the at least one second signal comprises determining a second distance between the wireless communication device and the second static communication node on the basis of the second signal, and determining a third distance between the wireless communication device and the third static communication node on the basis of the third signal, and/or wherein, especially for the purpose of trilateration, the step of determining the location of the wireless communication device on the basis of the first and at least one second distances comprises determining the location of the wireless communication device on the basis of the first, second, and third distances.
